# EUROPEAN PATENT APPLICATION

(11) **EP 4 503 275 A1**
(43) Date of publication of application: **05.02.2025**
(21) Application number: 23779096.9
(22) Date of filing: 24.02.2023
(51) Int. Cl.: H01M 50/107, H01M 10/04, H01M 50/119, H01M 50/152, H01M 50/159, H01M 50/167, H01M 50/184

(54) **BATTERY CONTAINER**

(30) Priority: 31.03.2022 JP 2022058953
(71) Applicant: Toyo Seikan Group Holdings, Ltd., Shinagawa-ku Tokyo 141-8627 (JP); Toyo Kohan Co., Ltd., Tokyo 141-8260 (JP); Toyo Seikan Co., Ltd., Tokyo 141-8640 (JP)
(72) Inventor: KOBAYASHI, Tomomi, Yokohama-shi, Kanagawa 240-0062 (JP); AIHARA, Takeshi, Yokohama-shi, Kanagawa 240-0062 (JP); SEGAMI, Kouta, Yokohama-shi, Kanagawa 240-0062 (JP); YOSHIOKA, Koh, Kudamatsu-shi, Yamaguchi 744-8611 (JP); OOHORI, Kei, Yokohama-shi, Kanagawa 230-0001 (JP)
(74) Representative: Piticco, Lorena
(86) International application number: PCT/JP2023/006661
(87) International publication number: WO 2023/189066

(57) **Abstract**

Provided is a battery container (1) including a can body (2) and a can lid (3), each being made of a metal. A peripheral edge portion of the can lid (3) is joined to a peripheral edge of an opening portion of the can body (2) formed in a bottomed cylindrical shape. A bottom portion (21) of the can body (2) is formed so as to include a curved surface, and the can lid (3) is formed so as to include a curved surface that is curved in the same manner as an area of the bottom portion (21) of the can body (2) that is formed as the curved surface.

## Description

### Technical Field

The present invention relates to a battery container in which a battery element is to be enclosed.

### Background Art

A secondary battery as represented by a lithium-ion battery generally has a structure in which a battery element is enclosed in various containers. The battery element includes a positive electrode material, a negative electrode material, and a separator. The positive electrode material includes a positive electrode current collector and a positive electrode active material layered thereon. The negative electrode material includes a negative electrode current collector and a negative electrode active material layered thereon. The separator is impregnated with an electrolyte.

For example, in Patent Literature 1, there is disclosed a battery including two exterior materials that are bonded to each other at joint portions. Each of the exterior materials includes a stainless-steel plate and a resin layer formed thereon. The battery is formed by enclosing a battery element inside housing portions formed on the exterior materials.

### Citation List

### Patent Literature

[PTL 1] JP 2012-94374 A

### Summary of Invention

### Technical Problem

When this kind of battery is charged and discharged, a pressure in a container may increase due to, for example, a temperature rise or generation of gas from the battery element. In such a case, deformation of the container, which may be caused by an increase in internal pressure, is undesirable.

The inventors of the present invention have conducted extensive studies in view of the circumstances described above so as to provide a battery container that is less deformable even when an internal pressure increases. As a result, the inventors achieved the present invention.

### Solution to Problem

According to the present invention, there is provided a battery container including a can body and a can lid, each being made of a metal, wherein a peripheral edge portion of the can lid is joined to a peripheral edge portion of an opening of the can body formed in a bottomed cylindrical shape, wherein a bottom portion of the can body is formed so as to include a curved surface that is outwardly convex or inwardly convex, and wherein the can lid is formed so as to include a curved surface that is inwardly convex or outwardly convex and is curved in the same manner as an area of the bottom portion that is formed as the curved surface.

### Advantageous Effects of Invention

According to the present invention, the battery container that is less deformable even when the internal pressure increases can be provided.

### Brief Description of Drawings

FIG. 1 is a front view for generally illustrating a battery container according to an embodiment of the present invention.
FIG. 2 is a plan view for generally illustrating the battery container according to the embodiment of the present invention.
FIG. 3 is a sectional view taken along the line A-A of FIG. 2.
FIG. 4 is an explanatory view for schematically illustrating one example of a battery element.
FIG. 5 is an explanatory view for illustrating one example of a can body and a can lid before being joined together.
FIG. 6 is an explanatory view for illustrating one example of a double seaming step.
FIG. 7 is an explanatory view for illustrating another example of the double seaming step.
FIG. 8 is a graph for showing displacement δ [mm] of a central part of the can lid in a vertical direction with respect to an internal pressure P [MPa] of the battery container.
FIG. 9 is a graph for showing displacement δ [mm] of a central part of a bottom portion in the vertical direction with respect to the internal pressure P [MPa] of the battery container.
FIG. 10 is an explanatory view for schematically illustrating a part of a cross section of the battery container and the battery element for one example of a contact state therebetween.

### Description of Embodiments

Now, a preferred embodiment of the present invention is described with reference to the drawings.

### [Battery Container]

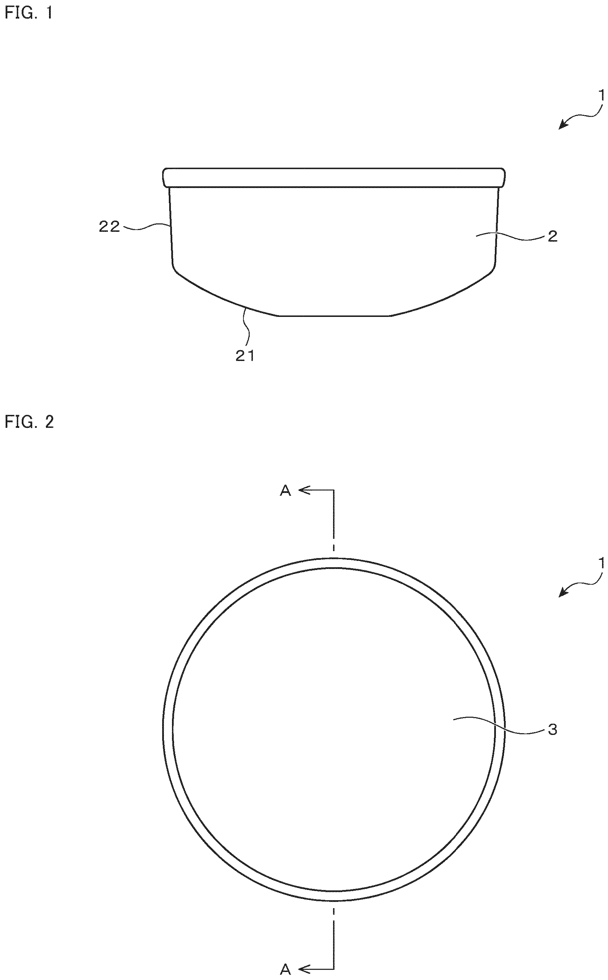

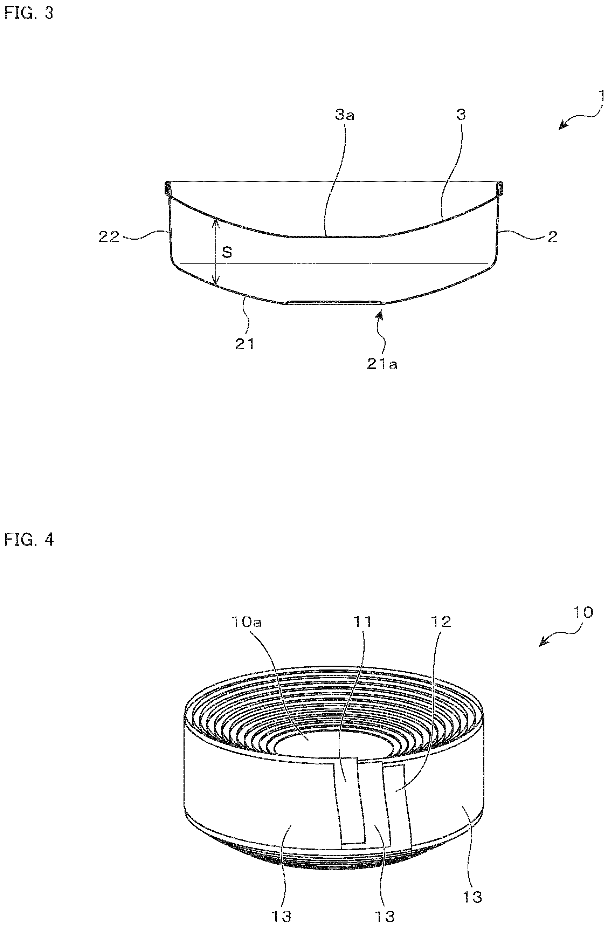

FIG. 1 is a front view for generally illustrating a battery container according to this embodiment. FIG. 2 is a plan view of the battery container, and FIG. 3 is a sectional view taken along the line A-A of FIG. 2.

A battery container 1 illustrated in FIG. 1 to FIG. 3 includes a can body 2 and a can lid 3, each being made of a metal. A peripheral edge portion of the can lid 3 is joined to a peripheral edge of an opening portion of the can body 2 formed in a bottomed cylindrical shape. In this manner, the battery container 1 is configured to enclose a battery element 10.

In FIG. 3, an illustration of the battery element 10 to be enclosed in the battery container 1 is omitted.

While details of the battery element 10 are described later, it is preferred that the can body 2 and the can lid 3 be each formed of a metal plate that has been subjected to a surface treatment such as a nickel plating treatment, a tin plating treatment, or a zinc plating treatment as needed in consideration of corrosion resistance to an electrolyte included in the battery element 10. As the metal plate, for example, a metal plate of steel, tin-free steel, stainless steel, aluminum, an aluminum alloy, or other alloys, or a clad plate formed by laminating different kinds of metals can be used. The can body 2 and the can lid 3 can be each formed of the metal plate as described above to have a desired shape by, for example, pressing or draw and ironing (DI). The can body 2 and the can lid 3 may be formed of the same kind of metal plates or may be formed of different kinds of metal plates. When different kinds of metal plates are used, it is preferred that, in a lithium-ion battery, for example, the can lid 3 (or the can body 2) serving as a positive electrode be made of aluminum or an aluminum alloy and the can body 2 (or the can lid 3) serving as a negative electrode be made of steel having been subjected to a surface-treatment, in particular, steel having been subjected to a surface treatment that includes a nickel plating treatment.

In the illustrated example, the can body 2 is formed in a bottomed cylindrical shape including a bottom portion 21 and a side wall portion 22. The side wall portion 22 stands upward from a peripheral edge of the bottom portion 21. The bottom portion 21 is formed so as to include a curved surface that is outwardly convex.

When the bottom portion 21 is formed so as to include the curved surface described above, the bottom portion 21 may be formed in a spherical shape with a constant curvature radius, a non-spherical shape with a curvature radius changing depending on an area, or a truncated conical shape including a curved surface formed in a spherical shape or a non-spherical shape. The curvature radius of the curved surface depends on the kind of or a plate thickness of a metal plate to be used, and is preferably from 35 mm to 300 mm, more preferably from 50 mm to 100 mm. Although not particularly illustrated, the bottom portion 21 may be formed so as to include a curved surface that is inwardly convex.

Further, when the bottom portion 21 is formed so as to include a curved surface that is outwardly convex, a recess portion that is set back inward can be formed in a part of the bottom portion 21 by, for example, forming a predetermined range of a central part of the bottom portion 21 into a flat shape or forming the bottom portion 21 with a recessed bottom shape 21a in consideration of stability at the time of placement of the battery container 1 with the bottom portion 21 facing down.

Meanwhile, the can lid 3 is formed so as to include a curved surface that is inwardly convex and is curved in the same manner as an area of the bottom portion 21 of the can body 2, which is formed as the curved surface.

In this case, the phrase "curved in the same manner" is to be understood as follows. An area of the can lid 3 that is formed as the curved surface and the area of the bottom portion 21 of the can body 2 that is formed as the curved surface are not required to be curved in a completely identical manner. The area of the can lid 3 that is formed as the curved surface is only required to be curved so that a distance S between the can lid 3 and the area of the bottom portion 21 of the can body 2 that is formed as the curved surface is substantially the same within a range of machining accuracy under a state in which the can lid 3 is joined to the can body 2.

Further, as illustrated, a central part 3a of the can lid 3 may be formed in a flat shape. When the bottom portion 21 is formed so as to include a curved surface that is inwardly convex, the can lid 3 may be formed so as to include a curved surface that is outwardly convex, although not particularly illustrated.

### [Battery Element]

Next, one example of the battery element 10 to be enclosed in the battery container 1 is described.

In FIG. 4, one example of the battery element 10 is schematically illustrated. The battery element 10 can be manufactured, for example, as follows. A positive electrode material 11, a negative electrode material 12, and separators 13 are each formed in an elongated band-like shape. The positive electrode material 11 includes a positive electrode current collector and a positive electrode active material layered thereon. The negative electrode material 12 includes a negative electrode current collector and a negative electrode active material layered thereon. The separator 13 is impregnated with an electrolyte. Then, the above-mentioned materials are placed in a winding machine. The separator 13, the negative electrode material 12, the separator 13, and the positive electrode material 11 are overlaid in the stated order and then are wound around a winding core.

In FIG. 4, a part of a terminal end of the battery element 10 that has been wound up is cut away. The separator 13, the positive electrode material 11, the separator 13, and the negative electrode material 12 may be overlaid in the stated order so as to form the battery element 10.

The positive electrode material 11, the negative electrode material 12, and the separators 13 are generally formed with an equal width. In one example of the battery element 10 illustrated in FIG. 4, the separators 13 are overlaid while both ends in a width direction are aligned with each other. The positive electrode material 11 is shifted to one end side in the width direction by several mm with respect to the separators 13, and the negative electrode material 12 is shifted to another end side in the width direction by several mm with respect to the separators 13. Under the above-mentioned state, the positive electrode material 11, the negative electrode material 12, and the separators 13 are wound up. In this manner, the negative electrode material 12 protrudes to one winding end surface (lower winding end surface in FIG. 4) side of the battery element 10 and the positive electrode material 11 protrudes to another winding end surface (upper winding end surface in FIG. 4) side of the battery element 10 while the positive electrode material 11 and the negative electrode material 12 are kept separated by the separators 13.

Then, while the positive electrode material 11, the negative electrode material 12, and the separators 13 are being wound in the above-mentioned manner, the positive electrode material 11, the negative electrode material 12, and the separators 13 are gradually shifted to one side of the winding core in an axial direction (that is, a shift during winding is intentionally controlled). As a result, the positive electrode material 11, the negative electrode material 12, and the separators 13 are wound so that one winding end surface of the battery element 10 is curved correspondingly to the curved surface of the bottom portion 21 of the can body 2 and another winding end surface of the battery element 10 is curved correspondingly to the curved surface of the can lid 3.

In one example of the battery element 10 illustrated in FIG. 4, a central portion 10a, which is formed after the winding core is removed, is hollow.

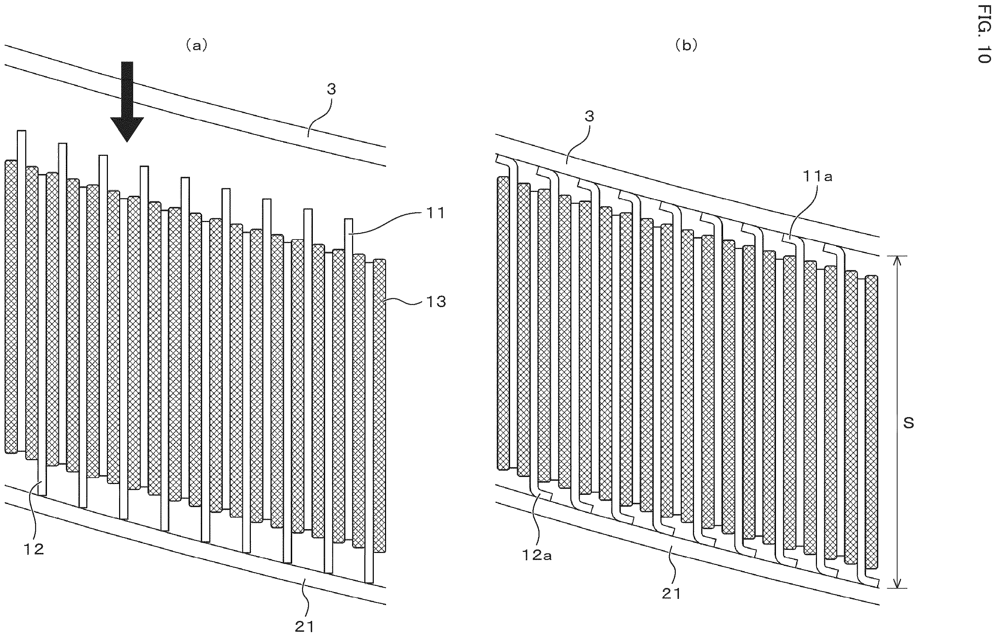

The battery element 10 manufactured as described above is housed in the can body 2. After an appropriate amount of electrolyte is injected thereinto so that the separators 13 are impregnated with the electrolyte, the can lid 3 is joined to the can body 2 to thereby enclose the battery element 10 in the battery container 1. At this time, as partially illustrated in FIG. 10, an end edge 12a of the negative electrode material 12, which protrudes to one winding end surface side of the battery element 10, is bent and is crimped to the bottom portion 21 of the can body 2 along its inclination. At the same time, an end edge 11a of the positive electrode material 11, which protrudes to another winding end surface side of the battery element 10, is bent and is crimped to the can lid 3 along its inclination. Under the above-mentioned state, dimensions of the portions and the like are appropriately adjusted so that the battery element 10 is fixed inside the battery container 1. In particular, the distance S between the can lid 3 and the bottom portion 21 of the can body 2 is appropriately adjusted in accordance with a thickness of the battery element 10 (distance between the winding end surfaces) (see FIG. 10(b)). When the battery element 10 illustrated in FIG. 4 as one example is enclosed in the battery container 1 in the above-mentioned manner, the negative electrode material 12, which protrudes to the one winding end surface side, is electrically connected to the can body 2 over a sufficient conduction area and the positive electrode material 11, which protrudes to another winding end surface side, is electrically connected to the can lid 3 over a sufficient conduction area. As a result, a battery with the can body 2 side serving as a negative electrode and the can lid 3 side serving as a positive electrode is constructed.

The positive electrode current collector, the negative electrode current collector, the positive electrode active material, the negative electrode active material, the electrolyte, and the separator, which form the battery element 10, can be appropriately selected from those used for this kind of battery. It is apparent that a winding method used at the time of manufacture of the battery element 10 can be changed as needed so that the can body 2 side serves as the positive electrode and the can lid 3 side serves as the negative electrode.

### [Joint Structure]

Next, a joint structure for joining the can lid 3 to the can body 2 is described.

When the battery element 10 illustrated as one example in FIG. 4 is enclosed in the battery container 1 in the above-mentioned manner so that the battery having the can body 2 side serving as the negative electrode and the can lid 3 side serving as the positive electrode is constructed, it is required that the can body 2 and the can lid 3 be jointed together in a state of being electrically isolated from each other.

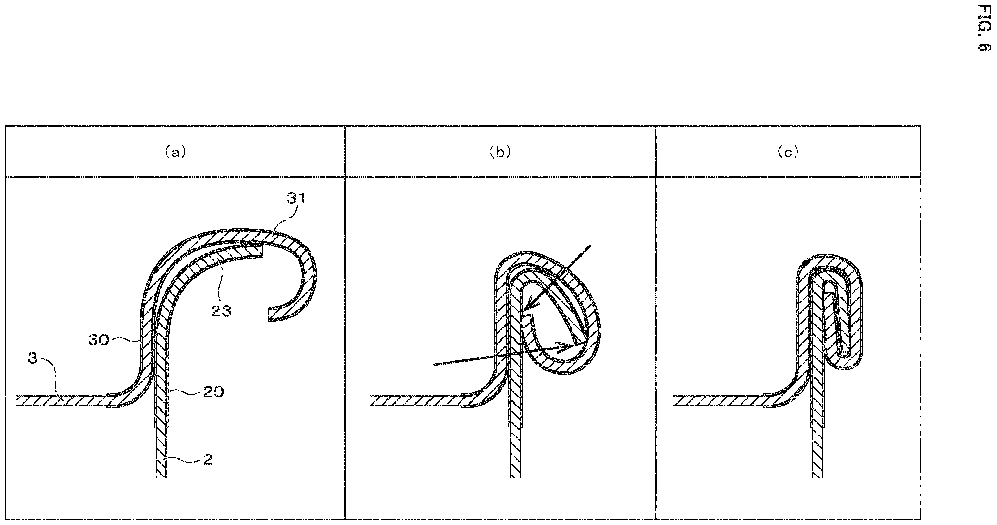

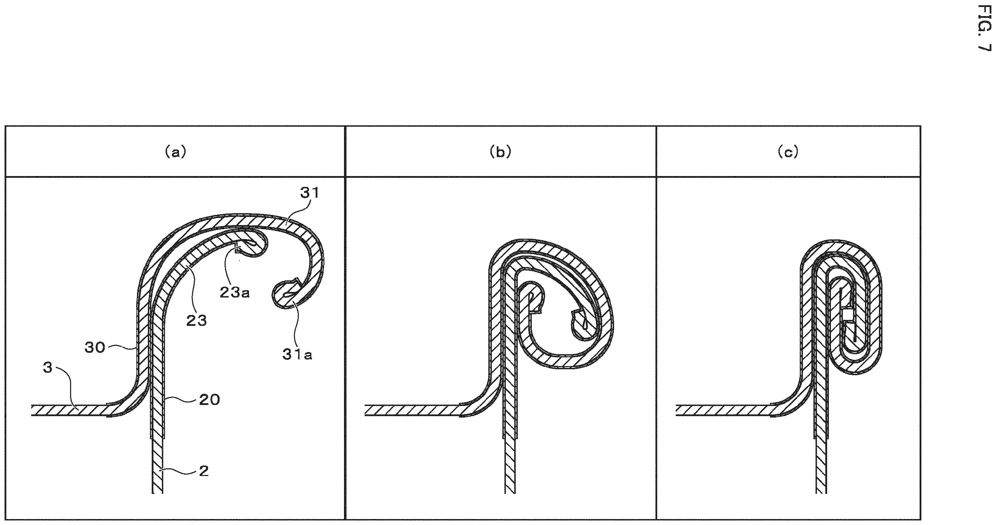

In such a case, it is preferred that insulating layers 20 and 30 be formed using an insulative resin material such as an epoxy resin, a silicone resin, an urethan resin, a phenol resin, polyethylene, or polypropylene on portions which are brought into contact with each other when the can body 2 and the can lid 3 are joined together (see FIG. 6 and FIG. 7). An insulating film made of, for example, the resin materials described above may be interposed at a joint portion between the can body 2 and the can lid 3 so that the can body 2 and the can lid 3 are joined together in an electrically isolated state.

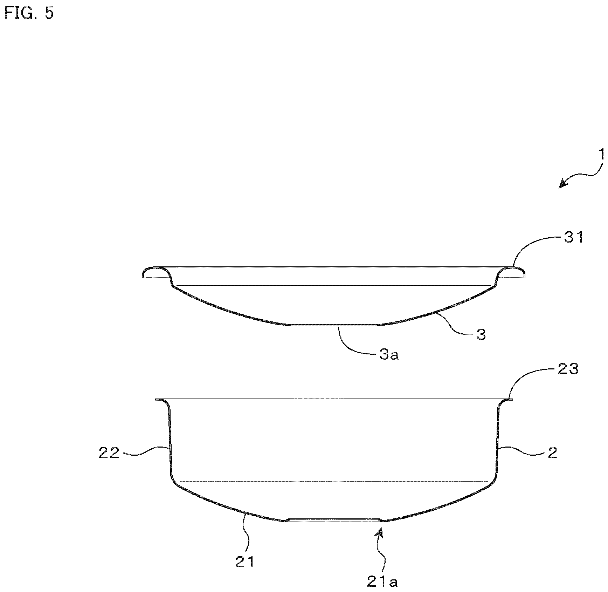

Further, as in FIG. 5 in which one example of the can body 2 and the can lid 3 before being joined together is illustrated, the can body 2 may be formed so that a flange portion 23 that extends outwards is formed at a peripheral edge portion of an opening of the can body 2. Meanwhile, the can lid 3 may be formed so that a curled portion 31 is formed at the peripheral edge portion of the can lid 3. The curled portion 31 is shaped in such a manner as to cover the flange portion 23 formed at the can body 2 from above. It is preferred that the can body 2 and the can lid 3 be joined together so as to form a double seam. The double seam is formed by joining the flange portion 23 of the can body 2 and the curled portion 31 of the can lid 3 together by seaming as illustrated in FIG. 6 so as to cramp the flange portion 23 and the curled portion 31 each being in a double-folded state.

In FIG. 5, longitudinal cross sections of the can body 2 and the can lid 3 before being joined together are illustrated.

FIG. 6 is an explanatory view for illustrating one example of a double seaming step. In order to join the flange portion 23 of the can body 2 and the curled portion 31 of the can lid 3 together by seaming, first seaming is first performed with use of a first seaming roll (not shown) under a state in which the curled portion 31 of the can lid 3 is placed on the flange portion 23 of the can body 2 in such a manner as to cover the flange portion 23 (see FIG. 6(a)). At this time, the flange portion 23 of the can body 2 is folded back toward a radially inner side of the can body 2, while the curled portion 31 of the can lid 3 is rolled up under the folded part (see Fig. 6(b)). Subsequently, second seaming is performed with use of a second seaming roll (not shown). The flange portion 23 of the can body 2 and the curled portion 31 of the can lid 3 are cramped together under a state in which the curled portion 31 is rolled up under the flange portion 23 that is folded back. In this manner, the double seaming is completed (see FIG. 6(c)).

Further, when the flange portion 23 of the can body 2 and the curled portion 31 of the can lid 3 are joined together by seaming as in one example illustrated in FIG. 6, an end surface of the flange portion 23 of the can body 2 may bit into the insulating layer 30 formed over the curled portion 31 of the can lid 3 or an end surface of the curled portion 31 of the can lid 3 may bit into the insulating layer 20 formed over the flange portion 23 of the can body 2 as indicated by the arrows in FIG. 6(b). Thus, there is a concern that the insulating layer 30 or the insulating layer 20 may be broken.

When there is a concern about the problem described above, for example, when the insulating layer 30 formed over the curled portion 31 of the can lid 3 may be broken by the end surface of the flange portion 23 of the can body 2, it is preferred that a folded-back portion 23a be formed at an end portion of the flange portion 23, that is, at an end portion of the peripheral edge portion of the opening of the can body 2. When there is a concern that the insulating layer 20 formed over the flange portion 23 of the can body 2 may be broken by the end surface of the curled portion 31 of the can lid 3, it is preferred that a folded-back portion 31a be formed at an end portion of the curled portion 31, that is, at an end portion of the peripheral edge portion of the can lid 3. The folded-back portions 23a and 31a can be formed in such a manner as to have their end portions rounded by a processing method also called "hemming". Hemming is a method of folding back the end portion of the flange portion 23 and the end portion of the curled portion 31 at 180 degrees and then pressing and flattening the end portions.

In FIG. 7, there is illustrated one example of the double seaming step. In this example of the double seaming step, the folded-back portions 23a and 31a are formed at both of the end portion of the flange portion 23 of the can body 2 and the end portion of the curled portion 31 of the can lid 3 and are then joined together by seaming. In the example described above, the end portion of the flange portion 23 of the can body 2 and the end portion of the curled portion 31 of the can lid 3 are rounded as the folded-back portions 23a and 31a. Thus, the insulating layers 20 and 30 formed thereover can be effectively prevented from being broken at the time of double seaming.

As described above, when the folded-back portion 23a, 31a is formed at at least one of the end portion of the peripheral edge portion of the opening of the can body 2 or the end portion of the peripheral edge portion of the can lid 3 as needed, the insulating layers 20 and 30 formed thereon can be effectively prevented from being broken at the time of double seaming. For the formation of the folded-back portion 23a, 31a, a fold-back direction may be opposite to that in the example illustrated in FIG. 7.

When the folded-back portions 23a and 31a as described above are formed, it is preferred that the insulating layers 20 and 30 be formed after the formation of the folded-back portions 23a and 31a so that the folded-back portions 23a and 31a are entirely covered with the insulating layers 20 and 30 without leaving the folded-back end surface of the flange portion 23 and the folded-back end surface of the curled portion 31 exposed.

A sealing compound, an anaerobic adhesive, or the like may be applied onto the joint portion between the can body 2 and the can lid 3 for the purpose of, for example, enhancing hermeticity or increasing joint strength.

According to this embodiment described above, the bottom portion 21 of the can body 2 is formed so as to include the curved surface that is outwardly convex or inwardly convex. At the same time, the can lid 3 is formed so as to include the curved surface that is inwardly convex or outwardly convex and is curved in the same manner as the area of the bottom portion 21 of the can body 2 that is formed as the curved surface. As a result, the battery container 1, which is less deformable even when an internal pressure rises, can be provided.

Further, the battery container 1 according to this embodiment can be used particularly suitably for the purpose of constructing a battery in which the battery element 10 illustrated as one example in FIG. 4 is enclosed. For example, a battery is constructed as described above by electrically connecting the negative electrode material 12 protruding to one winding end surface side of the battery element 10 enclosed therein and the can body 2 to each other and electrically connecting the positive electrode material 11 protruding to another winding end surface side and the can lid 3 to each other. In the battery described above, when the bottom portion 21 of the can body 2 or the can lid 3 is deformed in a swelling manner due to a rise in internal pressure, electrical conduction efficiency between the negative electrode material 12 and the can body 2 may decrease or electrical conduction efficiency between the positive electrode material 11 and the can lid 3 may decrease. According to this embodiment, however, such a problem can be effectively prevented.

Further, when the battery container 1 according to this embodiment is used to construct, for example, a battery with the can body 2 side serving as a negative electrode and the can lid 3 side serving as a positive electrode, a plurality of battery containers 1 can be stacked on one another so that the can lid 3 of one of the battery containers 1 and the bottom portion 21 of the can body 2 of another one of the battery containers 1 are in contact with each other and be used in a serially connected state. In such a case, the bottom portion 21 is formed so as to include a curved surface that is outwardly convex, and the central part of the bottom portion 21 is formed in the recessed bottom shape 21a. An area of the can lid 3 that is opposed to the central part of the bottom portion 21 except for the joint portion is formed as a curved surface that is inwardly convex. As a result, an air gap can be defined between the can lid 3 of one of the battery containers 1 that are stacked on one another and the area of the bottom portion 21 of another one of the battery containers 1 that is formed in the recessed bottom shape 21a.

The air gap defined between the battery containers 1 that are stacked on one another provides the following advantage. That is, it is preferred that a safety valve for releasing a pressure when a pressure in the container excessively rises be provided to the battery container 1. When such a safety valve is provided in a recess portion corresponding to an inner area of the portion formed in the recessed bottom shape 21a at the central part of the bottom portion 21, an excessively increased internal pressure can be effectively released via the air gap without hindering an operation of the safety valve. As the safety valve, for example, a groove-shaped score portion may be engraved into the recess portion corresponding to the inner area of the portion formed in the recessed bottom shape 21a at the central part of the bottom portion 21. The score portion may be configured to be broken to release the pressure when the pressure in the container excessively rises.

Hereinafter, the present invention is described in more detail by way of specific examples.

### [Example 1]

The can body 2 and the can lid 3 were each formed using a steel plate having a surface that had been subjected to a nickel-plating treatment (nickel-plated steel plate). The bottom portion 21 of the can body 2 was formed so as to include a curved surface that is outwardly convex, and the curved surface was formed as a spherical surface with a radius of 60 mm. A thickness of the bottom portion 21 was 0.200 mm. The can lid 3 was formed so as to include a curved surface that is inwardly convex, and the curved surface was formed as a spherical surface with a radius of 60 mm, which was similar to the spherical surface of the curved surface of the bottom portion 21 of the can body 2. A thickness of the can lid 3 was 0.300 mm.

Subsequently, the peripheral edge portion of the can lid 3 was joined to the peripheral edge portion of the opening of the can body 2 by double seaming. The battery container 1 formed by joining the can lid 3 to the can body 2 had a diameter of about 66 mm and a height of about 20 mm.

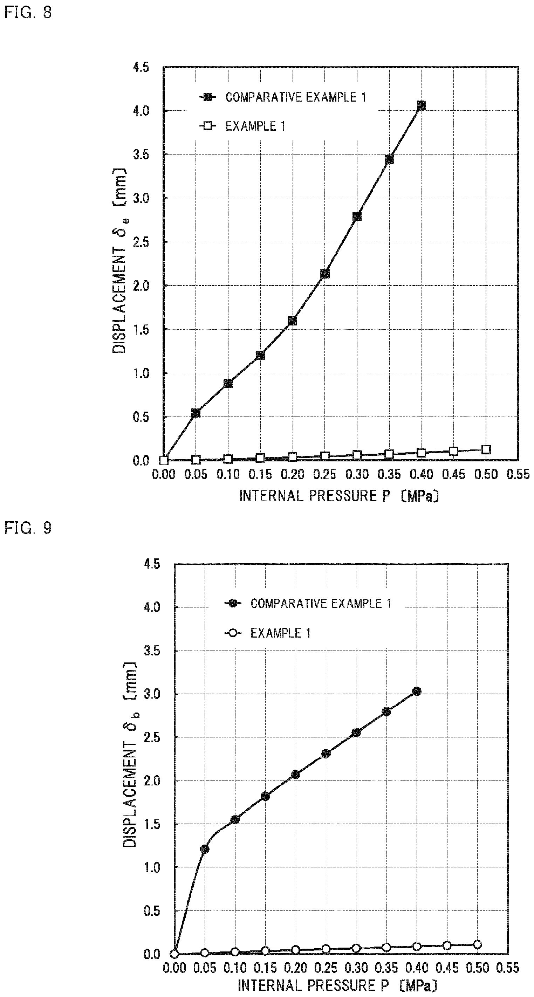

The battery container 1 formed by joining the can lid 3 to the can body 2 was installed horizontally, and a hose connected to an air compressor was hermetically connected to the central part of the bottom portion 21 of the can body 2. Displacement δ [mm] of the central part of the can lid 3 in the vertical direction with respect to an internal pressure P [MPa] of the battery container 1 was measured. A result of the measurement is shown in FIG. 8.

Similarly, the battery container 1 formed by joining the can lid 3 to the can body 2 was installed horizontally, and the hose connected to the air compressor was hermetically connected to the central part of the can lid 3. Displacement δ [mm] of the central part of the bottom portion 21 in the vertical direction with respect to an internal pressure P [MPa] of the battery container 1 was measured. A result of the measurement is shown in FIG. 9.

Further, the internal pressure P was increased until the can lid 3 started separating from the joint portion between the can body 2 and the can lid 3 and being folded over (until occurrence of buckling of the can lid 3). Then, the joint portion withstood up to 1.88 MPa.

### [Comparative Example 1]

A can body and a can lid were formed in the same manner as that for those of Example 1 except that a bottom portion of the can body was formed in a flat shape and an area of the can lid except for a joint portion was formed in a flat shape. The can body and the can lid formed in such a manner were joined together by double seaming.

Displacement δ [mm] of a central part of the can lid in the vertical direction with respect to the internal pressure P [MPa] was measured in the same manner as that for Example 1. A result of the measurement is shown in FIG. 8.

Displacement δ [mm] of a central part of the bottom portion in the vertical direction with respect to the internal pressure P [MPa] was measured in the same manner as that for Example 1. A result of the measurement is shown in FIG. 9.

The internal pressure P was increased in the same manner as that for Example 1 until buckling of the can lid occurred. The buckling of the can lid was observed at 0.59 MPa.

The preferred embodiment of the present invention has been described above, but the present invention is not limited to the embodiment described above. Needless to say, various modifications may be made within the scope of the present invention.

For example, an example of the battery container 1 having a circular shape in plan view has been illustrated and described in the embodiment described above. However, the battery container 1 may have a polygonal shape such as a quadrangular shape in plan view as needed.

Further, the battery element 10 to be enclosed in the battery container 1 is not limited to the example illustrated in FIG. 4. For example, a battery element to be enclosed may be formed as follows. The positive electrode material 11, the negative electrode material 12, and the separators 13, each being formed with an equal width, are wound in an overlaid state while two ends in the width direction of the positive electrode material 11, the negative electrode material 12, and the separators 13 are aligned with each other, respectively. A tab connected to the positive electrode material 11 and a tab connected to the negative electrode material 12 are drawn out to an outside of the battery container 1 so as to serve as a positive electrode terminal or a negative electrode terminal. When the battery element described above is enclosed, it is not required that the can body 2 and the can lid 3 be joined together in an electrically isolated state. Further, a battery with the can lid 3 (or the can body 2) side serving as a positive electrode and the can body 2 (or the can lid 3) side serving as a negative electrode may be constructed by connecting the tab connected to the positive electrode material 11 and the tab connected to the negative electrode material 12 to the can lid 3 (or the can body 2) and the can body 2 (or the can lid 3), respectively. Such an aspect is applicable to the battery element 10 illustrated as one example in FIG. 4. When both of conduction through the winding end surface of the battery element 10 as described above and conduction through the tabs are used, a conducting state between the battery container 1 and the battery element 10 can be improved.

### Reference Signs List

1 battery container
2 can body
20 insulating layer
21 bottom portion
23 flange portion (peripheral edge portion of opening of can body)
23a folded-back portion
3 can lid
30 insulating layer
31 curled portion (peripheral edge portion of can lid)
31a folded-back portion
10 battery element
11 positive electrode material
12 negative electrode material
13 separator

## Claims

1. A battery container, comprising a can body and a can lid, each being made of a metal,
wherein a peripheral edge portion of the can lid is joined to a peripheral edge portion of an opening of the can body formed in a bottomed cylindrical shape,
wherein a bottom portion of the can body is formed so as to include a curved surface that is outwardly convex or inwardly convex, and
wherein the can lid is formed so as to include a curved surface that is inwardly convex or outwardly convex and is curved in the same manner as an area of the bottom portion that is formed as the curved surface.

2. The battery container according to claim 1, wherein the can body and the can lid are joined together by double seaming.

3. The battery container according to claim 2, wherein a folded-back portion is formed at at least one of an end portion of the peripheral edge portion of the opening of the can body or an end portion of the peripheral edge portion of the can lid.

4. The battery container according to any one of claims 1 to 3, wherein the can body and the can lid are joined together in an electrically isolated state.

5. The battery container according to claim 4,
wherein the battery container is configured to enclose a battery element,
wherein the battery element includes a positive electrode material, a negative electrode material, and separators being formed with an equal width and are overlaid in the order of the separator, the negative electrode material, the separator, and the positive electrode material or in the order of the separator, the positive electrode material, the separator, and the negative electrode material,
wherein the positive electrode material, the negative electrode material, and the separators are wound while the positive electrode material is shifted to one end side in a width direction of the battery element and the negative electrode material is shifted to another end side in the width direction with respect to the separators that are overlaid with two ends in the width direction being both aligned with each other, and
wherein one winding end surface is curved correspondingly to the curved surface of the can body, and another winding end surface is curved correspondingly to the curved surface of the can lid.
